Europäisches Patentamt

(19) European Patent Office

Office européen des brevets

(11) Publication number: **0 194 976**
**B1**

# EUROPEAN PATENT SPECIFICATION

(45) Date of publication of the patent specification:
**12.04.89**

(51) Int. Cl.⁴: **F 16 B 5/06, F 16 B 37/04**

(21) Application number: **86830013.8**

(22) Date of filing: **20.01.86**

(54) **Device for rapid connection of two elements on nonparallel planes.**

(30) Priority: **08.02.85 IT 5296885 U**

(43) Date of publication of application:
**17.09.86 Bulletin 86/38**

(45) Publication of the grant of the patent:
**12.04.89 Bulletin 89/15**

(84) Designated Contracting States:
**DE FR GB SE**

(56) References cited:
**US-A- 2 624 386**
**US-A- 3 498 655**
**US-A- 3 970 399**
**US-A- 4 188 148**
**US-A- 4 338 755**

(73) Proprietor: **FIAT AUTO S.p.A., Corso Giovanni Agnelli 200, I-10135 Torino (IT)**

(72) Inventor: **Brunetti, Domenico, Via Tripoli 6, I-10136 Torino (IT)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

The present invention concerns a device for the rapid connection of two elements on nonparallel planes, or of two mutually orthogonal or sloping walls.

Most devices for the rapid connection, which are presently used, provide solutions of mutual fastening of elements on parallel planes by means of rubber nogs put into proper holes.

The known devices are generally not fit to guarantee a rapid connection of two elements when, instead of being positioned on parallel planes, they are on orthogonal or sloping walls or on nonparallel planes. It is also known from US-A-3 970 399 a fastener assembly for securing a pair of contiguous standards at substantially right angles relative to each other which includes a fastener comprising first and second perpendicularly oriented webs, and means mounted on the second web for connecting a standard thereto.

The purpose of the present invention is to provide a device for the rapid connection on non parallel planes of two elements having walls, said device consisting of a body having two supporting sides to lie against the walls of the two elements to be connected and forming the angle at which the elements are connected, the first one of said sides having a hole fully or partly piercing the body of the device and fit to be engaged by fastening means fastening the wall of the first element to said body, characterised in that the second one of said sides has an appendix which is expanded under the action of said fastening means and is thereby fastened into an aperture in the wall of the second element.

Further characteristics and advantages of the present invention will emerge from the description which follows with reference to the appended drawings, provided purely by way of non-limiting example in which:

– Fig. 1 shows a plan view, a perspective view and a side view of the device according to the present invention with a square appendix to be fastened on orthogonal walls;

– Fig. 2 shows a plan view, a perspective view and a side view of the device according to the present invention with a circular appendix to be fastened on orthogonal walls;

– Fig. 3 shows a plan view a perspective view and a side view of the device according to the present invention to be fastened on sloping walls.

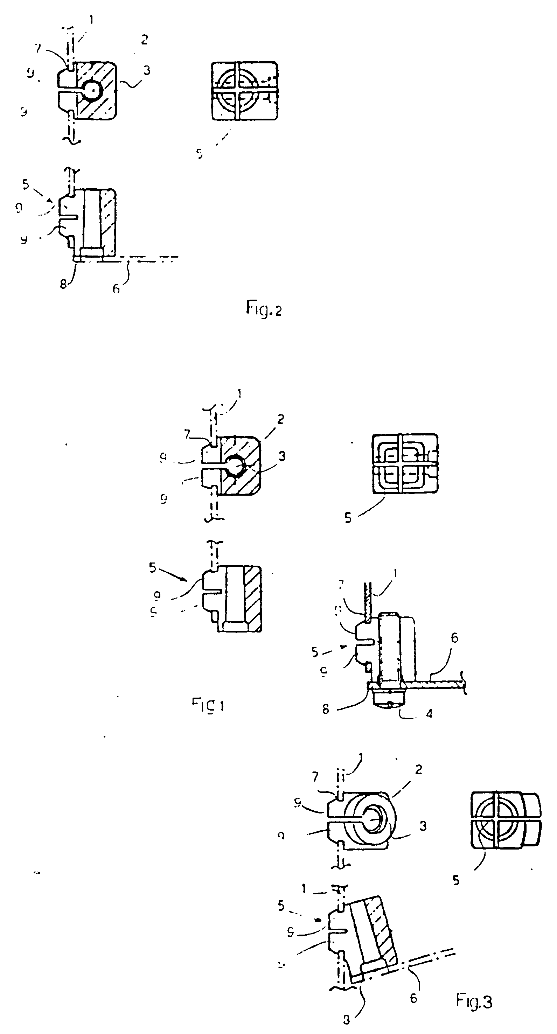

With reference to Figures 1, 2 and 3, numeral 2 shows the device consisting of a body having a hole 3 fully or partly piercing it, fit to receive the fastening element 4 through the hole 8 of the wall or the first element 6, and of an appendix 5.

Appendix 5 has a mushroom-shape and proper slots, at least one of which is so deep as to reach the hole 3; the resulting projections 9 are consequently fit to engage into the aperture 7 made in the wall of the second element 1, which may be either rectangular or square (Fig. 1).

In this case the appendix 5 of the device 2, with the projections 9, will have the same rectangular or square shape to allow the fastening of the first element 1 with respect to the second element 6 in onyl one spatial position.

In another preferred embodiment (Fig. 2) the aperture 7 made in the wall of the second element 1 is circular. In this case the appendix 5 of the device, with the projections 9, will have the same circular shape to allow a spatially free fastening of the second element 1 with respect to the first element 6.

Fig. 3 shows a third embodiment of the device 2 when the walls of the two elements 1 and 6 are not on orthogonal planes.

For the rapid connection of the two elements the technician will act as follows:

– insert the device 2 into the aperture 7 previously made in the wall of the second element 1;

– insert the screw 4 into the hole 8 previously made in the wall of the first element 6;

– fasten the screw 4 into the hole 3 of the device; by this operation the appendix 5 and the related projections 9 will be widened and the two elements 1 and 6 will be mutually fastened.

When the device illustrated in Fig. 2 is used, before the complete fastening, the technician can rotate the body 2 fastening the first element 6 with respect to the second element 1 in the desired position.

## Claims

1. Device (2) for the rapid connection on non parallel planes of two elements (1, 6) having walls, said device consisting of a body having two supporting sides to lie against the walls of the two elements to be connected and forming the angle at which the elements are connected, the first one of said sides having a hole (3) fully or partly piercing the body of the device and fit to be engaged by fastening means (4) fastening the wall of the first element (6) to said body, characterised in that the second one of said sides has an appendix (5) which is expanded under the action of said fastening means and is thereby fastened into an aperture made in the wall of the second element (1).

2. Device, according to claim 1, characterised in that the axis of the hole (3) is orthogonal to the side of the device (2) supporting the wall of the first element (6).

3. Device, according to the previous claims, characterised in that the expandable appendix (5) is a mushroom-shaped element presenting slots, at least one of which is so deep as to reach the hole (3).

4. Device, according to claim 1, characterised in that the fastening means is a screw (4).

## Patentansprüche

1. Vorrichtung zum schnellen Verbinden von zwei Bauteilen (1, 6) in nicht parallel zueinander verlaufenden Ebenen, wobei die beiden Bauteile (1, 6) Wände aufweisen und die Vorrichtung (2) aus einem Körper mit zwei tragenden Seiten besteht, die an den Wänden der miteinander verbindenden Bauteile zur Anlage kommen und die den Winkel bilden, unter dem die Bauteile miteinander zu verbinden sind, wobei ferner die erste der beiden Seiten ein Loch (3) aufweist, das den Körper der Vorrichtung teilweise oder ganz durchdringt und zur Aufnahme von Befestigungsmitteln (4) dient, die die Wand des ersten Bauteils (6) am Körper der Vorrichtung fixieren, dadurch gekennzeichnet, daß an der zweiten der beiden Seiten ein Vorsprung (5) ausgebildet ist, der unter der Einwirkung der Befestigungsmittel (4) aufgeweitet und dabei in einer Öffnung festgelegt wird, die in die Wand des zweiten Bauteils (1) eingearbeitet ist.

2. Vorrichtung nach Anspruch 1, dadurch gekennzeichnet, daß die Achse des Loches (3) orthogonal zu der Seite der Vorrichtung (2) verläuft, die die Wand des ersten Bauteils (6) trägt.

3. Vorrichtung nach Anspruch 1, dadurch gekennzeichnet, daß der aufweitbare Vorsprung (5) ein pilzförmiges Element mit Schlitzen ist, von denen wenigstens einer so tief ist, daß er bis an das Loch (3) heranreicht.

4. Vorrichtung nach Anspruch 1, dadurch gekennzeichnet, daß das Befestigungsmittel eine Schraube (4) ist.

## Revendications

1. Dispositif (2) pour relier rapidement, dans des plans non parallèles, deux éléments (1, 6) présentant des parois, ledit dispositif étant constitué d'un corps présentant deux faces supports qui sont prévues pour reposer contre les parois des deux éléments reliés et qui forment l'angle selon lequel les éléments sont reliés, la première desdites faces présentant un trou (3), qui traverse complètement ou partiellement le corps du dispositif et dans lequel vient en prise un moyen de fixation (4) qui fixe la paroi du premier élément (6) sur ledit corps, caractérisé en ce que la seconde desdites faces présente un appendice (5) qui s'expanse sous l'action dudit moyen de fixation et qui, de ce fait, se fixe dans une ouverture prévue dans la paroi du second élément (1).

2. Dispositif selon la revendication 1, caractérisé en ce que l'axe du trou (3) est orthogonal à la face du dispositif (2) qui supporte la paroi du premier élément (6).

3. Dispositif selon la revendication précédente, caractérisé en ce que l'appendice expansible (5) est un élément en forme de champignon présentant des fentes dont au moins une est suffisamment profonde pour atteindre le trou (3).

4. Dispositif selon la revendication 1, caractérisé en ce que le moyen de fixation est une vis (4).

Fig.2

Fig.1

Fig.3

5